# EUROPÄISCHE PATENTSCHRIFT

(11) **EP 1 801 298 B1**
(45) Veröffentlichungstag und Bekanntmachung des Hinweises auf die Patenterteilung: **06.06.2012**
(21) Anmeldenummer: 06025419.0
(22) Anmeldetag: 08.12.2006
(51) Int. Cl.: E03C 1/10, F16K 15/02

(54) **Systemtrenner mit Ablassventil und abflussseitigem Rückflussverhinderer**
Backflow preventer with discharge valve and downstream check valve
Dispositif anti-retour avec soupage de décharge et dispositif anti-reflux en aval

(30) Priorität: 21.12.2005 DE 102005061694
(43) Veröffentlichungstag der Anmeldung: 27.06.2007
(73) Patentinhaber: Honeywell Technologies Sarl ECC, 1110 Morges (CH)
(72) Erfinder: Pfeiffer, Uwe, 74834 Elztal (DE)
(74) Vertreter: Graefe, Jörg

(56) Entgegenhaltungen:
- DE-C1- 3 532 180
- US-A- 3 906 987
- US-A- 4 013 088
- US-A- 5 228 471

## Beschreibung

Die Erfindung betrifft einen Systemtrenner mit einem eingangsseitigen Rückflussverhinderer zum Unterbrechen einer Verbindung für eine Flüssigkeit zwischen einer Vordruckzone und einer Mittelzone des Systemtrenners, einem ausgangsseitigen Rückflussverhinderer zum Unterbrechen einer Verbindung für eine Flüssigkeit zwischen der Mittelzone und einer Hinterdruckzone und einem Ablassventil zum Entleeren der Mittelzone von der Flüssigkeit, wobei sowohl der eingangsseitige Rückflussverhinderer, der ausgangsseitige Rückflussverhinderer als auch das Ablassventil ein Sperrelement und einen Ventilsitz umfassen, die zum Herstellen und Unterbrechen der Verbindungen gegeneinander beweglich sind

Ein derartiger Systemtrenner ist beispielsweise aus der noch zu veröffentlichenden deutschen Patentanmeldung mit dem Aktenzeichen 10 2005 005 452.8 bekannt. Im dort beschriebenen Systemtrenner sind sowohl der eingangsseitige Rückflussverhinderer, der ausgangsseitige Rückflussverhinderer und das Ablassventil durch eine Vielzahl von Bauteilen gebildet. Insbesondere der eingangsseitige Rückflussverhinderer ist dabei sehr aufwändig ausgebildet. Von den insgesamt im Gehäuse verwendeten Bauteilen werden ca. 30 % für den eingangsseitigen Rückflussverhinderer verwendet. Der Rückflussverhinderer hat also einen sehr erheblichen Anteil am Gesamtaufwand des Systemtrenners. Dieses ist ein Nachteil, den es zu beheben gilt.

Ein weiterer Nachteil des in der Patentanmeldung beschriebenen Systemtrenners ist, dass bei einem Versagen des eingangsseitigen Rückflussverhinderers eine Betriebsstellung erreicht wird, bei der über längere Zeit Wasser aus der Entleerung austritt. Dieses Wasser geht unwiederbringlich verloren und kann darüber hinaus auch noch Schäden anrichten.

Die deutsche Patentschrift DE 35 32 180 C2 wird als nächstkommender Stand der Technik betrachtet. Sie offenbart ebenfalls einen Systemtrenner. Bei diesem Systemtrenner ist das Sperrelement des eingangsseitigen Rückflussverhinderers und das Sperrelement des Ablassventils so gekoppelt, dass entweder der eingangsseitige Rückflussverhinderer oder aber das Ablassventil geöffnet ist. Damit ist ein sicherer Betrieb gewährleistet. Die Ventilsitze des eingangsseitigen Rückflussverhinderers und des Ablassventils des in jener Patentschrift offenbarten Systemtrenners sind an einem als Steuerkörper bezeichneten Teil vorgesehen, das viele Absätze, Ausnehmungen und Hinterschnitte aufweist. Dieser Steuerkörper wirkt mit einem Teil zusammen, das die Sperrelemente des eingangsseitigen Rückflussverhinderers und des Ablassventils bildet. Auch dieses Teil ist aufwändig gestaltet. Jener Systemtrenner ist daher insgesamt aufwändig herzustellen.

Der Erfindung liegt daher das Problem zugrunde, den Aufwand für den Systemtrenner zu reduzieren.

Dieses Problem wird erfindungsgemäß durch einen Systemtrenner mit den Merkmalen des Anspruchs 1 gelöst.

Das Sperrelement des Ablassventils und das Sperrelement des eingangsseitigen Rückflussverhinderers sind durch ein gemeinsames Teil gebildet. Dadurch wird insgesamt die Anzahl der Teile für den eingangsseitigen Rückflussverhinderer und das Ablassventil reduziert. Der Aufwand für einen erfindungsgemäßen Systemtrenner ist dadurch deutlich kleiner als der Aufwand für den vorbeschriebenen.

Das Sperrelement des Ablassventils und das Sperrelement des eingangsseitigen Rückflussverhinderers werden - wie bereits ausgeführt - durch ein Teil gebildet. Dieses Teil ist als Topf ausgeführt, wobei der Boden des Topfes vom Sperrelement des eingangsseitigen Rückflussverhinderers umfasst ist und die Wandung des Topfes das Sperrelement des Ablassventils beziehungsweise der Ablassventile bildet.

Der Topf weist in der Wandung zwischen dem Sperrelement des eingangsseitigen Rückflussverhinderers und dem Sperrelemente des Ablassventils Ausnehmungen auf, die zumindest bei geöffnetem Rückflussverhinderer in Wirkverbindung mit einem Überströmkanal stehen und so einen Flüssigkeitsfluss von der Vordruckzone in die Mittelzone ermöglichen.

Der Ventilsitz des eingangsseitigen Rückflussverhinderers und des ausgangsseitigen Rückflussverhinderers können an einem Gehäuse des Systemtrenners vorgesehen sein. Bei dem vorbeschriebenen Systemtrenner war dagegen der Ventilsitz des eingangsseitigen Rückflussverhinderers separat von dem Gehäuse gebildet. Auch hierdurch wird somit die Anzahl der Teile reduziert, die für einen erfindungsgemäßen Systemtrenner notwendig sind.

Der Ventilsitz des eingangsseitigen Rückflussverhinderers kann durch einen umlaufenden Bund im Gehäuse gebildet sein. Der umlaufende Bund kann durch eine Einfräsung auf der Innenseite des Gehäuses hergestellt werden. Insgesamt ist dadurch die Herstellung des Gehäuses durch eine sehr kostengünstige spanende Bearbeitung möglich.

Bei dem erfindungsgemäßen Systemtrenner kann sich im Bereich der Mittelzone an den Ventilsitz des eingangsseitigen Rückflussverhinderers zumindest ein Überstromkanal anschließen. Über diesen Überstromkanal kann in der geöffneten Stellung des eingangsseitigen Rückflussverhinderers das Sperrelement des eingangsseitigen Rückflussverhinderers überströmt werden, um eine Durchströmung des Systemtrenners zu ermöglichen. Der Überstromkanal wird durch eine ringförmige Nut, zum Beispiel in Form einer Einfräsung gebildet.

Das Gehäuse eines erfindungsgemäßen Systemtrenners kann zwischen dem Ventilsitz des eingangsseitigen Rückflussverhinderers und dem Ventilsitz des ausgangsseitigen Rückflussverhinderers einen die Mittelzone bildenden Bereich begrenzen.

Gemäß der Erfindung kann der Systemtrenner so ausgebildet sein, dass der die Mittelzone begrenzende Bereich des Gehäuses einen Abschnitt umfasst, in dem das aus dem Element des Ablassventils und dem Sperrelement des eingangsseitigen Rückflussverhinderers gebildete Teil verschiebbar ist. Das das Sperrelement des Ablassventils und das Sperrelement des eingangsseitigen Rückflussverhinderers bildende Teil kann darüber hinaus gegen eine Feder in eine geöffnete Stellung des eingangsseitigen Rückflussverhinderers bewegt werden.

Der Topf ist vorteilhaft so ausgestaltet, dass der Systemtrenner und insbesondere der eingangsseitige Rückflussverhinderer druckausgeglichen ist. Dieses wird durch gleich druckwirksame Flächen des Topfes zur Vordruckzone und zur Mittelzone erreicht.

Ein Ausführungsbeispiel für einen erfindungsgemäßen Systemtrenner ist anhand der Zeichnungen näher beschrieben. Es zeigt
- Fig. 1: einen Schnitt durch den erfindungsgemäßen Systemtrenner in der linken Hälfte der Figur in einer ersten Betriebsstellung und in einer rechten Seite der Figur in einer zweiten Betriebsstellung und
- Fig. 2: den Systemtrenner gemäß Figur 1, in der linken Hälfte der Figur in der ersten Betriebsstellung und in der rechten Hälfte der Figur in einer dritten Betriebsstellung.

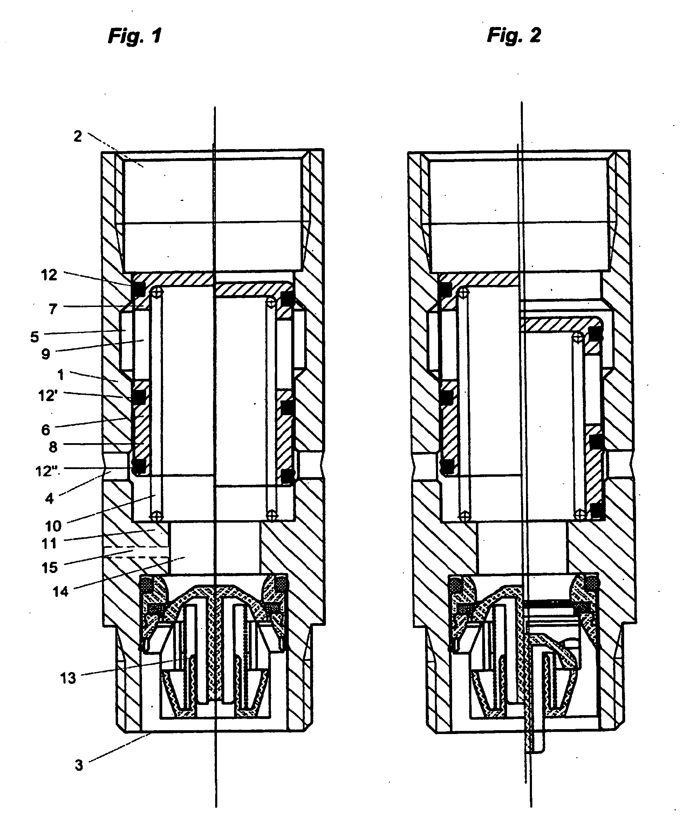

Der erfindungsgemäße Systemtrenner, wie er in den Fig. 1 und 2 dargestellt ist, weist ein Gehäuse auf, das im Wesentlichen hohlzylindrisch ausgeführt ist. Eingangsseitig weist das Gehäuse ein Innengewinde und ausgangsseitig ein Außengewinde auf, um den Systemtrenner mit zuführenden beziehungsweise weiterführenden Rohrleitungen verschrauben zu können. Die äußere Mantelfläche des Gehäuses ist im Wesentlichen glatt und ohne Vorsprünge ausgeführt, so dass der Systemtrenner auch in eine Rohrleitung eingesetzt werden kann.

Der Systemtrenner umfasst einen eingangsseitigen Rückflussverhinderer, Ablass- bzw. Entleerungsöffnungen, die Ablassventile bilden und einen ausgangsseitigen Rückflussverhinderer 13.

Während der ausgangsseitige Rückflussverhinderer 13 als separates Bauteil ausgeführt ist, werden Elemente des Ablassventils und des eingangsseitigen Rückflussverhinderers durch das Gehäuse 1 gebildet. Sowohl der eingangsseitige Rückflussverhinderer als auch der ausgangsseitige Rückflussverhinderer und die Ablassventile umfassen Sperrelemente, die gegenüber einem stationären Ventilsitz verschiebbar sind. Die Ventilsitze des eingangsseitigen Rückflussverhinderers und der Ablassventile sind im Gehäuse 1 ausgebildet, während der Ventilsitz des ausgangsseitigen Rückflussverhinderers 13 ein ringförmiges Bauelement ist, das in das Gehäuse 1 eingeschoben ist, wie auch die übrigen Elemente des ausgangsseitigen Rückflussverhinderers, darunter das Sperrelement.

Der Ventilsitz des eingangsseitigen Rückflussverhinderers wird durch einen umlaufenden Bund an der inneren Wandung des Gehäuses 1 ausgebildet.

Zwischen dem Ventilsitz des eingangsseitigen Rückflussverhinderers und dem Ventilsitz des ausgangsseitigen Rückflussverhinderers befindet sich eine Mittelzone, die im Übrigen von der Wandung des Gehäuses 1 des Systemtrenners begrenzt wird. Eingangsseitig vor dem Ventilsitz des eingangsseitigen Rückflussverhinderers liegt eine Vordruckzone 2, während ausgangsseitig hinter dem Ventilsitz des ausgangsseitigen Rückflussverhinderers 13 eine Hinterdruckzone 3 gebildet ist. In der Innenwand des Gehäuses 1 im Bereich der Mittelzone 14 des Systemtrenners ist im Anschluss an den umlaufenden Bund des Ventilsitzes des eingangsseitigen Rückflussverhinderers eine ringförmige Nut vorgesehen, die einen Überströmkanal 5 bildet.

An den Ventilsitz des ausgangsseitigen Rückflussverhinderers schließt sich von der Innenseite der Wandung des Gehäuses 1 ein umlaufender Bund 11 an, an dem der Ventilsitz des ausgangsseitigen Rückflussverhinderers 13 anliegt. Benachbart zu diesem umlaufenden Bund 11 in der Mittelzone 14 sind Bohrungen 4 in der Wandung des Gehäuses 1 vorgesehen, die Durchtrittsöffnungen für die Ablassventile bilden. Der an der inneren Wand des Gehäuses 1 liegende Rand dieser Durchtrittsöffnungen 4 bildet jeweils einen Ventilsitz der Ablassventile.

Die Sperrelemente 8 der Ablassventile und das Sperrelement 7 des eingangsseitigen Rückflussverhinderers werden durch ein Teil ausgebildet, das durch einen Topf gebildet ist. Der Boden des Topfes mit einem unmittelbar an den Boden angrenzenden Bereich bildet das Sperrelement 7 des eingangsseitigen Rückflussverhinderers. Angrenzend daran sind in der Wandung des Topfes Ausnehmungen 9 vorgesehen. Daran anschließend bildet die Wandung schließlich die Sperrelemente 8 der Ablassventile.

Der Topf 7, 8, 9, der die Sperrelemente 7, 8 und die Ausnehmungen 9 umfasst, ist verschiebbar in dem Gehäuse 1 gelagert. Der Topf wird dabei von einer Feder 10, die auf dem umlaufenden Bund 11 abgestützt ist, in Richtung Eingang des Systemtrenners gedrückt und ist durch Dichtungen 12, 12', 12" gegenüber dem Gehäuse 1 abgedichtet.

Ein durch gestrichelte Linien angedeuteter Meßanschluß 15 kann zum Messen des Druckes in der Mittelzone 14 durch ein geeignetes Messgerät genutzt werden. Man erhält dann einen Systemtrenner der Bauart BA.

In den Fig. 1 und 2 ist jeweils in der linken Bildhälfte die erste Betriebsstellung des Systemtrenners dargestellt. In dieser ersten Betriebsstellung ist sowohl der eingangsseitige als auch der ausgangsseitige Rückflussverhinderer geschlossen, während das Ablassventil geöffnet ist.

In der ersten Betriebsstellung sind die Druckverhältnisse zwischen der Vordruckzone 2, der Mittelzone 14 und der Hinterdruckzone 3 so, dass die Feder 10 den Topf 7, 8, 9 und somit auch das Sperrelement 7 des eingangsseitigen Rückflussverhinderers nach oben drückt, so dass das Sperrelement 7 des eingangsseitigen Rückflussverhinderers an dem Ventilsitz des eingangsseitigen Rückflussverhinderers anliegt. In dieser ersten Betriebsstellung sind die Durchtrittsöffnungen 4 der Ablassventile nicht durch die Sperrelemente 8, d. h. die Wandung des Topfes 7, 8, 9 abgedeckt. In einer geeigneten Einbaulage des Systemtrenners kann damit die Flüssigkeit in der Mittelzone aus dem Gehäuse 1 des Systemtrenners austreten.

In der ersten Betriebsstellung wird das Sperrelement des ausgangsseitigen Rückflussverhinderers gegen dessen Ventilsitz gedrückt, so dass ein Rückfluss der in der weiterführenden Leitung anstehenden Flüssigkeit verhindert ist.

In der zweiten Betriebsstellung, wie sie in Fig. 1 in der rechten Hälfte dargestellt ist, ist die Druckdifferenz zwischen der Mittelzone 14 und der Vordruckzone höher, so dass der Topf 7, 8, 9 von dem in der Vordruckzone anstehenden Druck gegen den Druck der Feder 10 in Richtung Ausgang gedrückt wird. In dieser zweiten Betriebsstellung übergreifen die Sperrelemente 8 der Ablassventile die Durchtrittsöffnungen 4, so dass die Verbindung zwischen der Mittelzone und der Umgebung des Systemtrenners unterbrochen ist. Sowohl der eingangsseitige Rückflussverhinderer, die Ablassventile als auch der ausgangsseitige Rückflussverhinderer 13 sind in der zweiten Betriebsstellung weiter geschlossen.

Wird der Druck in der Vordruckzone 2 weiter erhöht, wie es in der rechten Hälfte der Figur 2 dargestellt ist, wird der Topf 7, 8, 9 weiter gegen den Druck der Feder verschoben, und zwar solange, bis der Topf 7, 8, 9 mit seinem ausgangsseitigen Rand an dem umlaufenden Bund 11 anschlägt. In dieser Stellung übergreifen die Sperrelemente 8 der Ablassventile weiter die Durchtrittsöffnungen 4 der Ablassventile, so dass keine Flüssigkeit aus der Mittelzone austreten kann. Gleichzeitig sind die Überströmkanäle 5 freigegeben, so dass durch die Überströmkanäle 5 am Sperrelement 7 des eingangsseitigen Rückflussverhinderers vorbei und durch die Ausnehmungen 9 Flüssigkeit aus der zuführenden Leitung beziehungsweise der Vordruckzone 2 in die Mittelzone 14 eintreten kann. Der Druck in der Mittelzone 14 steigt an, so dass aufgrund des höheren Drucks in der Mittelzone 14 auch der ausgangsseitige Rückflussverhinderer geöffnet wird und ein Durchströmen des Systemtrenners möglich ist.

Erfolgt später am Ende der weiterführenden Leitung keine Flüssigkeitsabgabe, erhöht sich der Druck in der Hinterdruckzone am Ausgang des Systemtrenners. Der ausgangsseitige Rückflussverhinderer schließt dadurch. Auch der Druck in der Mittelzone erhöht sich, so dass die Feder 10 den eingangsseitigen Rückflussverhinderer schließt, wobei die Ablassventile aufgrund der Wahl der Federvorspannung durch den Eingangsdruck weiter geschlossen bleiben, das heißt der Systemtrenner wird in die zweite Betriebsstellung gebracht.

Kommt es hingegen in der zuführenden Leitung zu einem Rücksaugen von Flüssigkeit, so drückt die Feder 10 das Topfteil 7, 8, 9 unter Öffnung der Ablassventile weiter in Richtung der Eingangsseite, also in die erste Betriebsstellung. Die Mittelzone wird dadurch entleert, und ein Rücktransport von möglicherweise kontaminierter Flüssigkeit von der Ausgangsseite in die Versorgungsseite ist dadurch sicher ausgeschlossen.

Dieselbe Sicherheit mit Entleerung der Mittelzone ergibt sich auch bei einem möglichen Rückdrücken von der Ausgangsseite, beispielsweise durch einen Druckschlag in der nachfolgenden Leitung, falls der ausgangsseitige Rückflussverhinderer defekt sein sollte.

## Patentansprüche

1. Systemtrenner mit einem eingangsseitigem Rückflussverhinderer zum Unterbrechen einer Verbindung für eine Flüssigkeit zwischen einer Vordruckzone (2) und einer Mittelzone (14), einem ausgangsseitigem Rückflussverhinderer (13) zum Unterbrechen einer Verbindung für eine Flüssigkeit zwischen der Mittelzone (14) und einer Hinterdruckzone (3) und einem Ablassventil zum Entleeren der Mittelzone (14) von der Flüssigkeit, wobei sowohl der eingangsseitige Rückflussverhinderer (13), der ausgangseitige Rückflussverhinderer als auch das Ablassventil ein Sperrelement (7, 8) und einen Ventilsitz umfassen, die Sperrelemente (7, 8) zum Herstellen und Unterbrechen der Verbindungen gegen die Ventilsitze beweglich sind, das Sperrelement (8) des Ablassventils und das Sperrelement (7) des eingangsseitigen Rückflussverhinderers gekoppelt sind, um zu verhindern, dass das Ablassventil und der eingangsseitige Rückflussverhinderer gleichzeitig in einer geöffneten Stellung sein können, und das Sperrelement (8) des Ablassventils und das Sperrelement (7) des eingangsseitigen Rückflussverhinderers durch ein gemeinsames Teil (6) gebildet werden,
**dadurch gekennzeichnet, dass**
das Sperrelement des Ablassventils und das Sperrelement des eingangseitigen Rückflussverhinderers bildende Teil (6) ein Topf (6) ist, dessen Boden Teil des Sperrelements (7) des eingangsseitigen Rückflussverhinderers ist oder das Sperrelement (7) des eingangsseitigen Rückflussverhinderers bildet,
dass die Wandung des Topfes (6) Teil des Sperrelements (8) des Ablassventils ist oder das Sperrelement (8) des Ablassventils bildet und
dass der Topf (6) in der Wandung zwischen dem Sperrelement des eingangsseitigen Rückflussverhinderers und dem Sperrelement des Ablassventils Ausnehmungen (9) aufweist, die zumindest bei geöffnetem Rückflussverhinderer in Wirkverbindung mit einem Überströmkanal (5) stehen.

2. Systemtrenner nach Anspruch 1 , **dadurch gekennzeichnet, dass** das Sperrelement (8) des Ablassventils und das Sperrelement (7) des eingangsseitigen Rückflussverhinderers fest miteinander verbunden sind.

3. Systemtrenner nach einem der Ansprüche 1 bis 2, **dadurch gekennzeichnet, dass** der Systemtrenner ein Gehäuse (1) aufweist, an dem der Ventilsitz des eingangsseitigen Rückflussverhinderers und des ausgangsseitigen Rückflussverhinderers (13) vorgesehen sind.

4. Systemtrenner nach Anspruch 3, **dadurch gekennzeichnet, dass** das Gehäuse (1) zwischen dem Ventilsitz des eingangsseitigen Rückflussverhinderers und dem Ventilsitz des ausgangsseitigen Rückflussverhinderers (14) einen die Mittelzone (14) bildenden Bereich begrenzt.

5. Systemtrenner nach Anspruch 4, **dadurch gekennzeichnet, dass** der die Mittelzone (14) begrenzende Bereich des Gehäuses (1) einen Abschnitt umfasst, in dem das aus dem Sperrelement (8) des Ablassventils und dem Sperrelement (7) des eingansseitigen Rückflussverhinderers gebildete Teil verschiebbar ist.

6. Systemtrenner nach Anspruch 5, **dadurch gekennzeichnet, dass** das das Sperrelement des Ablassventils und das Sperrelement des eingangseitigen Rückflussverhinderers bildende Teil (6) gegen eine Feder (10) in eine geöffnete Stellung des eingangsseitigen Rückflussverhinderers bewegbar ist.

7. Systemtrenner nach einem der Ansprüche 3 bis 5, **dadurch gekennzeichnet, dass** der Ventilsitz des eingangsseitigen Rückflussverhinderers durch einen umlaufenden Bund im Gehäuse gebildet ist.

8. Systemtrenner nach einem der Ansprüche 1 bis 6, **dadurch gekennzeichnet, dass** sich in der Mittelzone (14) an den Ventilsitz des eingangsseitigen Rückflussverhinderers zumindest ein Überströmkanal (5) anschließt, über den in einer geöffneten Stellung des eingangsseitigen Rückflussverhinderers das Sperrelement des eingangsseitigen Rückflussverhinderers überströmt wird.

9. Systemtrenner nach einem der Ansprüche 1 bis 8, **dadurch gekennzeichnet, dass** die von einem Druck in der Vordruckzone beaufschlagbare Fläche des Topfes gleich der von einem Druck in der Mittelzone beaufschlagbare Fläche des Topfes ist und der Systemtrenner deshalb druckausgeglichen ist.

## Claims

1. Backflow preventer having an inlet-side check valve for interrupting a connection for a liquid between an admission-pressure zone (2) and a central zone (14), having an outlet-side check valve (13) for interrupting a connection for a liquid between the central zone (14) and a backpressure zone (3), and having a discharge valve for emptying the central zone (14) of the liquid, wherein the inlet-side check valve (13), the outlet-side check valve and the discharge valve all comprise a blocking element (7, 8) and a valve seat, the blocking elements (7, 8) are movable towards the valve seats in order to establish and interrupt the connections, the blocking element (8) of the discharge valve and the blocking element (7) of the inlet-side check valve are coupled in order to prevent the discharge valve and the inlet-side check valve from being able to be in an open position at the same time, and the blocking element (8) of the discharge valve and the blocking element (7) of the inlet-side check valve are formed by a common part (6),
**characterized in that**
the part (6) forming the blocking element of the discharge valve and the blocking element of the inlet-side check valve is a pot (6), the base of which is part of the blocking element (7) of the inlet-side check valve or forms the blocking element (7) of the inlet-side check valve,
**in that** the wall of the pot (6) is part of the blocking element (8) of the discharge valve or forms the blocking element (8) of the discharge valve, and
**in that**, in the wall between the blocking element of the inlet-side check valve and the blocking element of the discharge valve, the pot (6) has recesses (9) which are operatively connected to an overflow duct (5), at least when the check valve is open.

2. Backflow preventer according to Claim 1, **characterized in that** the blocking element (8) of the discharge valve and the blocking element (7) of the inlet-side check valve are connected firmly together.

3. Backflow preventer according to either of Claims 1 and 2, **characterized in that** the backflow preventer has a housing (1), on which the valve seat of the inlet-side check valve and of the outlet-side check valve (13) are provided.

4. Backflow preventer according to Claim 3, **characterized in that**, between the valve seat of the inlet-side check valve and the valve seat of the outlet-side check valve (13), the housing (1) bounds a region forming the central zone (14).

5. Backflow preventer according to Claim 4, **characterized in that that** region of the housing (1) which bounds the central zone (14) comprises a portion in which the part formed from the blocking element (8) of the discharge valve and the blocking element (7) of the inlet-side check valve is displaceable.

6. Backflow preventer according to Claim 5, **characterized in that** the part (6) forming the blocking element of the discharge valve and the blocking element of the inlet-side check valve is moveable counter to a spring (10) into an open position of the inlet-side check valve.

7. Backflow preventer according to one of Claims 3 to 5, **characterized in that** the valve seat of the inlet-side check valve is formed by a circumferential collar in the housing.

8. Backflow preventer according to one of Claims 1 to 6, **characterized in that**, in the central zone (14), the valve seat of the inlet-side check valve is adjoined by at least one overflow duct (5), via which the blocking element of the inlet-side check valve is overflowed in an open position of the inlet-side check valve.

9. Backflow preventer according to one of Claims 1 to 8, **characterized in that that** surface of the pot which can be subjected to a pressure in the admission-pressure zone is the same as that surface of the pot which can be subjected to a pressure in the central zone, and the backflow preventer is therefore pressure-equalized.

## Revendications

1. Dispositif anti-retour avec un dispositif anti-reflux côté entrée pour interrompre une communication pour un liquide entre une zone de pression amont (2) et une zone moyenne (14), avec un dispositif anti-reflux côté sortie (13) pour interrompre une communication pour un liquide entre la zone moyenne (14) et une zone de pression aval (3), et avec une soupape de décharge pour vider la zone moyenne (14) du liquide, dans lequel aussi bien le dispositif anti-reflux côté entrée (13), le dispositif anti-reflux côté sortie que la soupape de décharge comprennent un élément d'arrêt (7, 8) et un siège de soupape, les éléments d'arrêt (7, 8) sont mobiles contre le siège de soupape pour établir et interrompre les communications, l'élément d'arrêt (8) de la soupape de décharge et l'élément d'arrêt (7) du dispositif anti-reflux côté entrée sont couplés, pour empêcher que la soupape dé décharge et le dispositif anti-reflux côté entrée puissent se trouver en même temps dans une position ouverte, et l'élément d'arrêt (8) de la soupape de décharge et l'élément d'arrêt (7) du dispositif anti-reflux côté entrée sont formés par une pièce commune (6), **caractérisé en ce que** la pièce (6) formant l'élément d'arrêt de la soupape de décharge et l'élément d'arrêt du dispositif anti-reflux côté entrée est un godet (6), dont le fond fait partie de l'élément d'arrêt (7) du dispositif anti-reflux côté entrée ou forme l'élément d'arrêt (7) du dispositif anti-reflux côté entrée, **en ce que** la paroi du godet (6) fait partie de l'élément d'arrêt (8) de la soupape de décharge ou forme l'élément d'arrêt (8) de la soupape de décharge, et **en ce que** le godet (6) présente, dans la paroi entre l'élément d'arrêt du dispositif anti-reflux côté entrée et l'élément d'arrêt de la soupape de décharge, des découpes (9) qui sont en communication active avec un canal de trop-plein (5) au moins lorsque le dispositif anti-reflux est ouvert.

2. Dispositif anti-retour selon la revendication 1, **caractérisé en ce que** l'élément d'arrêt (8) de la soupape de décharge et l'élément d'arrêt (7) du dispositif anti-reflux côté entrée sont solidaires l'un de l'autre.

3. Dispositif anti-retour selon l'une quelconque des revendications 1 à 2, **caractérisé en ce que** le dispositif anti-retour présente un boîtier (1), sur lequel sont prévus les sièges de soupape du dispositif anti-reflux côté entrée et du dispositif anti-reflux côté sortie (13).

4. Dispositif anti-retour selon la revendication 3, **caractérisé en ce que** le boîtier (1) délimite, entre le siège de soupape du dispositif anti-reflux côté entrée et le siège de soupape du dispositif anti-reflux côté sortie (13) côté sortie, une région formant la zone moyenne (14).

5. Dispositif anti-retour selon la revendication 4, **caractérisé en ce que** la région du boîtier (1) délimitant la zone moyenne (14) comprend une section, dans laquelle la pièce formée par l'élément d'arrêt (8) de la soupape de décharge et l'élément d'arrêt (7) du dispositif anti-reflux côté entrée peut coulisser.

6. Dispositif anti-retour selon la revendication 5, **caractérisé en ce que** la pièce (6) formant l'élément d'arrêt de la soupape de décharge et l'élément d'arrêt du dispositif anti-reflux côté entrée peut être déplacé contre un ressort (10) dans une position ouverte du dispositif anti-reflux côté entrée.

7. Dispositif anti-retour selon l'une quelconque des revendications 3 à 5, **caractérisé en ce que** le siège de soupape du dispositif anti-reflux côté entrée est formé par un bourrelet périphérique dans le boîtier.

8. Dispositif anti-retour selon l'une quelconque des revendications 1 à 6, **caractérisé en ce qu'**au moins un canal de trop-plein (5) se raccorde dans la zone moyenne (14) au siège de soupape du dispositif anti-reflux côté entrée, canal par lequel l'élément d'arrêt du dispositif anti-reflux côté entrée est submergé dans une position ouverte du dispositif anti-reflux côté entrée.

9. Dispositif anti-retour selon l'une quelconque des revendications 1 à 8, **caractérisé en ce que** la surface du godet pouvant être exposée à une pression dans la zone de pression amont est égale à la surface du godet pouvant être exposée à une pression dans la zone moyenne, et le dispositif anti-retour est dès lors équilibré en pression.
